# EUROPÄISCHE PATENTSCHRIFT

(11) **EP 1 318 967 B1**
(45) Veröffentlichungstag und Bekanntmachung des Hinweises auf die Patenterteilung: **25.08.2004**
(21) Anmeldenummer: 01972025.9
(22) Anmeldetag: 07.09.2001
(51) Int. Cl.: C01B 33/107, C01B 33/02

(54) **VERFAHREN ZUR HERSTELLUNG VON TRICHLORSILAN**
METHOD FOR PRODUCING TRICHLOROSILANE
PROCEDE DE PREPARATION DE TRICHLOROSILANE

(30) Priorität: 14.09.2000 DE 10045365; 02.10.2000 DE 10048794
(43) Veröffentlichungstag der Anmeldung: 18.06.2003
(73) Patentinhaber: SolarWorld Aktiengesellschaft, 53113 Bonn (DE)
(72) Erfinder: BULAN, Andreas, 40764 Langenfeld (DE); WEBER, Rainer, 51519 Odenthal (DE)
(74) Vertreter: Rau, Albrecht
(86) Internationale Anmeldenummer: PCT/EP2001/010359
(87) Internationale Veröffentlichungsnummer: WO 2002/022501

(56) Entgegenhaltungen:
- EP-A- 0 893 408
- EP-A- 1 020 472
- DE-A- 4 104 422

## Beschreibung

Die vorliegende Erfindung betrifft ein Verfahren zur Herstellung von Trichlorsilan durch Umsetzung von zerkleinertem Silicium mit Siliciumtetrachlorid, Wasserstoff und gegebenenfalls Chlorwasserstoff.

Trichlorsilan HSiCl₃ ist ein wertvolles Zwischenprodukt beispielsweise zur Herstellung von hochreinem Silicium, von Dichlorsilan H₂SiCl₂, von Silan SiH₄ und von Haftvermittlern.

Hochreines Silicium findet vielseitige Verwendung für elektronische und photovoltaische Zwecke, beispielsweise zur Herstellung von Solarzellen. Zur Herstellung von hochreinem Silicium wird beispielsweise metallurgisches Silicium in gasförmige Siliciumverbindungen, vorzugsweise Trichlorsilan, überführt, diese Verbindungen gereinigt und anschließend wieder in Silicium zurückgeführt.

Die Herstellung von Trichlorsilan erfolgt hauptsächlich durch Umsetzung von Silicium mit Chlorwasserstoff oder von Silicium mit Siliciumtetrachlorid, Wasserstoff und gegebenenfalls Chlorwasserstoff (Ullmann's Encyclopedia of Industrial Chemistry, 5^{th} ed. (1993), Vol. A24, 4-6). Die Reaktion von Silicium mit Siliciumtetrachlorid und Wasserstoff wird dabei in der Regel unter Einsatz von Katalysatoren durchgeführt, wobei hauptsächlich Kupferkatalysatoren zum Einsatz kommen.

So ist aus DE 41 04 422 A1 bekannt, die Umsetzung von Silicium mit Siliciumtetrachlorid und Wasserstoff in einem Wirbelbett ohne Anwendung von Druck in Gegenwart von Kupfersalzen einer niederen, aliphatischen, gesättigten Dicarbonsäure, insbesondere Kupferoxalat durchzuführen.

Ebenfalls ist es bekannt, die Reaktion von Silicium mit Siliciumtetrachlorid, Wasserstoff und gegebenenfalls Chlorwasserstoff in Gegenwart von pulverförmigem Kupfer (Chemical Abstracts CA 101, Nr. 9576d, 1984) oder von Gemischen aus Kupfermetall, Metallhalogeniden und Bromiden oder Iodiden von Eisen, Aluminium oder Vanadium (Chemical Abstracts CA 109, Nr. 57621b, 1988) durchzuführen.

Die Herstellung von Trichlorsilan wird üblicherweise in der Wirbelschicht durchgeführt (Ullmann's Encyclopedia of Industrial Chemistry, 5^{th} ed. (1993), Vol. A24, 4-6). Nachteilig beim Vorgehen gemäß Stand der Technik unter Verwendung von Kupferkatalysatoren bzw. Kupfer enthaltenen Katalysatormischungen ist, dass aus der Wirbelschicht oftmals kleine Katalysator-Partikel ausgetragen werden. Dies führt dazu, dass die Ausbeuten an gewünschtem Trichlorsilan im Laufe des Betriebs fallen und neuer Katalysator in den Reaktor zugegeben werden muss. Durch den Austragsverlust an Katalysator entstehen zusätzliche Kosten, zudem bei Einsatz eines Kupferkatalysators, da dieser vergleichsweise teuer ist.

Aus der EP 0 893 408 A 1 und der EP 1 020 472 A 1 sind Verfahren zur Herstellung von Alkyl- oder Aryl-Halogensilanen bekannt, bei denen ein Siliciumpulver mit einer Partikelgröße < 350µm in Gegenwart zum Beispiel eines Kupferkatalysators umgesetzt wird.

Es bestand daher die Aufgabe, ein Verfahren zur Herstellung von Trichlorsilan zur Verfügung zu stellen, das eine hohe Reaktionsgeschwindigkeit, bzw. hohe Raumzeitausbeute, aufweist und bei dem es nicht zum unerwünschten Austrag großer Mengen des Katalysators kommt.

Überraschenderweise wurde gefunden, dass nur geringe Austragsverluste an Katalysator auftreten, wenn zerkleinertes Silicium eingesetzt wird, wobei bei der Zerkleinerung des Siliciums, insbesondere von metallurgischem Silicium, der gewünschte Katalysator zugegeben wurde. Bei Umsetzung dieses zerkleinerten Siliciums mit Wasserstoff, Siliciumtetrachlorid und gegebenenfalls Chlorwasserstoff zu Trichlorsilan bleibt die Ausbeute an Trichlorsilan auch bei längerer Reaktionsführung nahezu gleich.

Gegenstand der Erfindung ist demnach ein Verfahren zur Herstellung von Trichlorsilan durch Umsetzung von Silicium mit Wasserstoff, Siliciumtetrachlorid und gegebenenfalls Chlorwasserstoff, das dadurch gekennzeichnet ist, dass das Silicium in zerkleinerter Form vorliegt und das Silicium beim Zerkleinern mit einem Katalysator versetzt wird.

Die Herstellung des erfindungsgemäß einzusetzenden Siliciums kann beispielsweise dadurch erfolgen, dass Silicium, vorzugsweise metallurgisches Silicium, und der gewünschte Katalysator gemeinsam in einer Mühle gemahlen werden, wobei Silicium und Katalysator der Mühle gemeinsam oder auch nacheinander zugeführt werden können.

Es ist jedoch auch möglich, das Silicium in einer Mühle zu mahlen, die aus einem Material besteht, das so gewählt wird, dass durch Abrieb während des Mahlvorgangens die gewünschte Katalysatorkonzentration im Silicium eingestellt wird.

Es ist auch möglich, eine Mischung aus Silicium und Katalysator in einer Mühle zu mahlen, die aus einem Material besteht, das so gewählt wird, dass durch Abrieb während des Mahlvorgangs weiteres katalytisch aktives Material in das Silicium eingebracht wird.

Die Zerkleinerung der Mischung aus Silicium und Katalysator kann darüberhinaus auch in anderen bekannten Zerkleinerungs-Vorrichtungen, beispielsweise in einem Backenbrecher erfolgen.

Vorzugsweise wird die Zerkleinerung in inerter Atmosphäre durchgeführt.

Das Arbeiten in inerter Atmosphäre verhindert die Bildung einer oxidischen Schicht auf den einzelnen Siliciumpartikeln. Eine solche Schicht verhindert den direkten Kontakt zwischen Katalysator und Silicium, wodurch die Umsetzung mit Siliciumtetrachlorid, Wasserstoff und gegebenenfalls Chlorwasserstoff zu Trichlorsilan entsprechend schlechter katalysiert würde.

Eine inerte Atmosphäre kann beispielsweise durch den Zusatz eines inerten Gases während des Zerkleinerungsvorgangs erzeugt werden. Geeignete inerte Gase sind beispielsweise Stickstoff und/oder Argon.

Geeignete Materialien für die eingesetzte Zerkleinerungs-Vorrichtung, insbesondere Mühle oder Backenbrecher sind beispielsweise Kupfer, Eisen und Legierungen dieser Metalle untereinander oder mit anderen Metallen, beispielsweise Messing oder Bronze. Es sind aber auch Zerkleinerungs-Vorrichtungen aus anderen Materialien geeignet, beispielsweise solche mit keramischen Beschichtungen, beispielsweise aus Wolframcarbid.

Als Mühle eignet sich beispielsweise eine Walzenmühle oder eine Kugelmühle, wobei auch andere Mühlentypen eingesetzt werden können.

Der Zerkleinerungsvorgang wird beispielsweise so durchgeführt, dass das resultierende zerkleinerte Silicium einen mittleren Korndurchmesser von 10 bis 1000 µm, bevorzugt von 100 bis 600 µm aufweist.

Als Katalysator sind beispielsweise Kupfer- und/oder Eisenkatalysatoren geeignet.

Geeignete Kupferkatalysatoren sind beispielsweise Kupfer, vorzugsweise in Form von Kupferpulver mit einer Korngröße von weniger als 100 µm, oder Verbindungen des Kupfers, vorzugsweise Kupferoxid, in der das Kupfer die Oxidationsstufe I besitzt oder Kupferchlorid wie z.B. Kupfer-I-chlorid.

Geeignete Eisenkatalysatoren sind beispielsweise Eisen, vorzugsweise in Form von Eisenpulver mit einer Korngröße von weniger als 100 µm, oder Verbindungen des Eisens, vorzugsweise Eisenchloride, besonders bevorzugt Eisen-II-chlorid.

Es ist auch möglich, Mischungen aus Kupfer- und/oder Eisenkatalysatoren mit weiteren katalytisch aktiven Bestandteilen einzusetzen. Solche katalytisch aktiven Bestandteilen sind beispielsweise Metallhalogenide, wie z.B. Chloride, Bromide oder Iodide des Aluminiums, Vanadiums oder Antimons.

Das erfindungsgemäß einzusetzende Silicium, das in zerkleinerter Form vorliegt und das beim Zerkleinern mit einem Katalysator versetzt wird, kann vor der erfmdungsgemäßen Umsetzung mit Wasserstoff, Siliciumtetrachlorid und gegebenenfalls Chlorwasserstoff einer Vorreaktion, z.B. mit Chlorwasserstoff oder Chlorwasserstoff und Wasserstoff unterzogen werden.

Üblicherweise wird im erfindungsgemäßen Verfahren ein zerkleinertes Silicium eingesetzt, in dem die Konzentration des Katalysators, berechnet als Metall, zwischen 0,5 bis 10 Gew.-%, bezogen auf des Gesamtgewicht von zerkleinertem Silicium und Katalysator, liegt, vorzugsweise zwischen 1 bis 5 Gew.-%. Es ist jedoch auch möglich, zerkleinertes Silicium mit einer höheren Konzentration an Katalysator einzusetzen.

Das erfindungsgemäße Verfahren kann beispielsweise bei einem Druck von 1 bis 40 bar (absolut), bevorzugt von 20 bis 35 bar durchgeführt werden.

Beispielsweise wird bei Temperaturen von 400 bis 800°C, bevorzugt von 450 bis 600°C, gearbeitet.

Die Wahl des Reaktors, in dem die erfindungsgemäße Umsetzung erfolgen soll, ist nicht kritisch, solange der Reaktor unter den Reaktionsbedingungen hinreichende Stabilität aufweist und den Kontakt der Ausgangsstoffe erlaubt. Beispielsweise kann in einem Festbettreaktor, einem Drehrohrofen oder einem Wirbelbettreaktor gearbeitet werden. Die Reaktionsführung in einem Wirbelbettreaktor ist bevorzugt.

Das Molverhältnis von Wasserstoff zu Siliciumtetrachlorid kann bei der erfindungsgemäßen Umsetzung beispielsweise 0,25:1 bis 4:1 betragen. Bevorzugt ist ein Molverhältnis von 0,6:1 bis 2:1.

Bei der erfindungsgemäßen Umsetzung kann Chlorwasserstoff zugegeben werden, wobei die Menge an Chlorwasserstoff in weiten Bereichen variiert werden kann. Bevorzugt wird Chlorwasserstoff in einer solchen Menge zugegeben, dass ein Molverhältnis von Siliciumtetrachlorid zu Chlorwasserstoff von 1:0 bis 1:10, besonders bevorzugt von 1:0,5 bis 1:1 resultiert.

Bevorzugt wird das erfindungsgemäße Verfahren in Gegenwart von Chlorwasserstoff durchgeführt.

Das nach dem erfindungsgemäßen Verfahren hergestellte Trichlorsilan kann beispielsweise zur Herstellung von Silan und/oder Reinst-Silicium verwendet werden.

Demnach betrifft die Erfindung auch ein Verfahren zur Herstellung von Silan und/oder Reinst-Silicium ausgehend von Trichlorsilan, das nach dem oben beschriebenen Verfahren erhalten wird.

Bevorzugt wird das erfindungsgemäße Verfahren in ein Gesamtverfahren zur Herstellung von Silan und/oder Reinst-Silicium integriert.

Besonders bevorzugt wird das erfindungsgemäße Verfahren in ein mehrstufiges Gesamtverfahren zur Herstellung von Reinst-Silicium integriert, wie es beispielsweise in "Economics of Polysilicon Process, Osaka Titanium Co., DOE/JPL 1012122 (1985), 57-78" beschrieben ist und das folgende Schritte umfasst:
a) Herstellung von Trichlorsilan,
b) Disproportionierung von Trichlorsilan unter Gewinnung von Silan,
c) Reinigung des Silans zu Reinst-Silan und
d) Thermische Zersetzung des Silans in einem Wirbelbettreaktor unter Abscheidung von Reinst-Silicium auf Silicium-Partikeln, die das Wirbelbett bilden.

Ganz besonders bevorzugt wird das erfindungesgemäße Verfahren in ein Verfahren zur Herstellung von Silan und/oder Reinst-Silicium integriert, das aus folgenden Schritten besteht:
1. Trichlorsilan-Synthese nach dem erfindungsgemäßen Verfahren mit anschließender destillativer Isolierung des erzeugten Trichlorsilans und Rückführung des nicht umgesetzten Siliciumtetrachlorids und gewünschtenfalls des nicht umgesetzten Wasserstoffs.
2. Disproportionierung des Trichlorsilans zu Silan und Siliciumtetrachlorid über die Zwischenstufen Dichlorsilan und Monochlorsilan an basischen Katalysatoren, vorzugsweise Amingruppen enthaltenden Katalysatoren, in apparativ zweistufiger oder einstufiger Ausführung und Rückführung des erzeugten, als Schwersieder anfallenden Siliciumtetrachlorids in die erste Verfahrensstufe.
3. Verwendung des Silans in der im vorangehenden Schritt anfallenden Reinheit oder Reinigung des Silans auf die vom weiteren Verwendungszweck geforderte Reinheit, vorzugsweise durch Destillation, besonders bevorzugt durch Destillation unter Druck.
   und gegebenenfalls
4. Thermische Zersetzung des Silans zu Reinst-Silicium, üblicherweise oberhalb 500°C.

Neben der thermischen Zersetzung an elektrisch beheizten Reinst-Silicium-Stäben ist dazu die thermische Zersetzung in einem Wirbelbett aus Reinst-Silicium-Partikeln geeignet, besonders wenn die Herstellung von solar grade Reinst-Silicium angestrebt ist. Zu diesem Zweck kann das Silan mit Wasserstoff und/oder mit Inertgasen im Mol-Verhältnis 1:0 bis 1:10 gemischt werden.

Das erfindungsgemäße Verfahren wird in den folgenden Beispielen näher erläutert, wobei die Beispiele jedoch nicht als Einschränkung des Erfindungsgedankens zu verstehen sind.

### Beispiele:

### Beispiel 1 (Vergleichsbeispiel)

In einem Reaktor, bestehend aus einem Glasrohr mit einem Durchmesser von 3 cm und einer Höhe von 18 cm mit eingebauter Glasfritte, wurde Silicium der Kornfraktion 40-400 µm eingesetzt, das mit einem Backenbrecher, dessen Backen mit Wolframcarbid beschichtet waren, zerkleinert wurde. Der Zerkleinerungsvorgang dauerte ca. 5 min/kg eingesetztes Silicium. Das zerkleinerte Silicium wurde mit Kupfer-I-chlorid gemischt. Die Kupferkonzentration in der Mischung aus Silicium und Kupfer-I-chlorid betrug 3 Gew.-%. 40 g dieser Mischung wurden auf 500°C aufgeheizt und durch einen Wendelrührer bewegt. Durch diese Schüttung wurde von unten ein Gasgemisch aus Wasserstoff und Siliciumtetrachlorid im Mol-Verhältnis 1,85:1 geleitet. Die Gasgeschwindigkeit betrug 2,85 cm/s, die Verweilzeit der Gasmischung in der Silicium-Schüttung betrug 1,7 s. Die Umsetzung erfolgte bei einem Druck von 1 bar (absolut). Die Ausbeute an Trichlorsilan betrug nach 30 min ca. 5 %, bezogen auf die Menge an eingesetztem Siliciumtetrachlorid, fiel nach weiteren 30 min auf 0,4 % und blieb dann konstant.

### Beispiel 2

In einem Reaktor, bestehend aus einem Glasrohr mit einem Durchmesser von 3 cm und einer Höhe von 18 cm mit eingebauter Glasfritte, wurde Silicium der Komfraktion 40-400 µm eingesetzt, das zusammen mit Kupfer-I-chlorid in einem Backenbrecher, dessen Backen mit Wolframcarbid beschichtet waren, zerkleinert wurde. Der Zerkleinerungsvorgang dauerte ca. 5 min/kg eingesetztes Silicium. Die Mischung enthielt danach 3 Gew.-% Kupfer. 40 g dieser Mischung wurde auf 500°C aufgeheizt und durch einen Wendelrührer bewegt. Durch diese Schüttung wurde von unten ein Gasgemisch aus Wasserstoff und Siliciumtetrachlorid im Mol-Verhältnis 1,85:1 geleitet. Die Gasgeschwindigkeit betrug 2,85 cm/s, die Verweilzeit der Gasmischung in der Silicium-Schüttung betrug 1,7 s. Die Umsetzung erfolgte bei einem Druck von 1 bar (absolut). Die Ausbeute an Trichlorsilan betrug nach 30 min ca. 8 %, bezogen auf die Menge an eingesetztem Siliciumtetrachlorid, stieg nach weiteren 30 min auf 12,1 % und blieb dann konstant.

## Patentansprüche

1. Verfahren zur Herstellung von Trichlorsilan durch Umsetzung von Silicium mit Wasserstoff, Siliciumtetrachlorid und gegebenenfalls Chlorwasserstoff, **dadurch gekennzeichnet, dass** das Silicium in zerkleinerter Form vorliegt und das Silicium beim Zerkleinern mit einem Katalysator versetzt wird.

2. Verfahren gemäß Anspruch 1, **dadurch gekennzeichnet, dass** das Silicium und der gewünschte Katalysator gemeinsam in einer Mühle zerkleinert werden.

3. Verfahren gemäß Anspruch 1, **dadurch gekennzeichnet, dass** das Silicium in einer Mühle zerkleinert wird, die aus einem Material besteht, aus dem durch Abrieb während des Mahlvorgangs die gewünschte Katalysatorkonzentration im Silicium eingestellt wird

4. Verfahren gemäß mindestens einem der Ansprüche 1 bis 3, **dadurch gekennzeichnet, dass** das zerkleinerte Silicium einen mittleren Teilchendurchmesser von 10 bis 1000 µm aufweist.

5. Verfahren gemäß mindestens einem der Ansprüche 1 bis 4, **dadurch gekennzeichnet, dass** die Konzentration des Katalysators, berechnet als Metall, im zerkleinerten Silicium 0,5 bis 10 Gew.-%, bezogen auf des Gesamtgewicht von zerkleinertem Silicium und Katalysator, beträgt.

6. Verfahren gemäß mindestens einem der Ansprüche 1 bis 5, **dadurch gekennzeichnet, dass** die Konzentration des Katalysators, berechnet als Metall, im zerkleinerten Silicium 1 bis 5 Gew.-%, bezogen auf des Gesamtgewicht von zerkleinertem Silicium und Katalysator, beträgt.

7. Verfahren gemäß mindestens einem der Ansprüche 1 bis 6, **dadurch gekennzeichnet, dass** die Umsetzung bei einem Druck von 1 bis 40 bar (absolut) durchgeführt wird.

8. Verfahren gemäß mindestens einem der Ansprüche 1 bis 7, **dadurch gekennzeichnet, dass** die Umsetzung bei Temperaturen von 400 bis 800°C durchgeführt wird.

9. Verfahren gemäß mindestens einem der Ansprüche 1 bis 8, **dadurch gekennzeichnet, dass** das Molverhältnis von Wasserstoff zu Siliciumtetrachlorid 0,25 : 1 bis 4 : 1 beträgt.

10. Verfahren gemäß mindestens einem der Ansprüche 1 bis 9, **dadurch gekennzeichnet, dass** das Molverhältnis von Siliciumtetrachlorid zu Chlorwasserstoff 1 : 0 bis 1 : 10 beträgt.

11. Verfahren zur Herstellung von Silan und/oder Reinst-Silicium, **dadurch gekennzeichnet, dass** von Trichlorsilan ausgegangen wird, welches hergestellt wird durch Umsetzung von Silicium mit Wasserstoff, Siliciumtetrachlorid und gegebenenfalls Chlorwasserstoff, wobei das Silicium in zerkleinerter Form vorliegt und das Silicium beim Zerkleinern mit einem Katalysator versetzt wird.

## Claims

1. A method for producing trichlorosilane by reacting silicon with hydrogen, silicon tetrachloride and, if necessary, hydrogen chloride, **characterized in that** the silicon is provided as milled silicon and is mixed with a catalyst during milling.

2. A method according to Claim 1, **characterized in that** the silicon and the desired catalyst are milled together in a mill.

3. A method according to Claim 1, **characterized in that** the silicon is milled in a mill made of a material from which due to attrition during milling the desired catalyst concentration is standardized in the silicon.

4. A method according to at least one of Claims 1 to 3, **characterized in that** the particles of the milled silicon have an average diameter of 10 to 1000 µm.

5. A method according to at least one of Claims 1 to 4, **characterized in that** the concentration of catalyst, calculated as metal, that is contained in the milled silicon, is between 0.5 to 10 weight percent based on the total weight of milled silicon and catalyst.

6. A method according to at least one of Claims 1 to 5, **characterized in that** the concentration of catalyst, calculated as metal, that is contained in the milled silicon is between 1 to 5 weight percent based on the total weight of milled silicon and catalyst.

7. A method according to at least one of Claims 1 to 6, **characterized in that** the reaction is carried out at a pressure of 1 to 40 bar (absolute).

8. A method according to at least one of Claims 1 to 7, **characterized in that** the reaction is carried out at temperatures from 400 to 800°C.

9. A method according to at least one of Claims 1 to 8, **characterized in that** the mol ratio of hydrogen to silicon tetrachloride is 0.25:1 to 4:1.

10. A method according to at least one of Claims 1 to 9, **characterized in that** the mol ratio of hydrogen to silicon tetrachloride is 1:0 to 1:10.

11. A method for producing silane and/or hyper-pure silicon, **characterized in that** the starting material is trichlorosilane, which is obtained by reacting silicon with hydrogen, silicon tetrachloride and, if necessary, hydrogen chloride, the silicon being provided as milled silicon and being mixed with a catalyst during milling.

## Revendications

1. Procédé de préparation de trichlorosilane par réaction du silicium avec de l'hydrogène, du tétrachlorure de silicium et éventuellement du chlorhydrure, **caractérisé en ce que** le silicium se présente sous forme broyée et le silicium est mélangé à un catalyseur lors du broyage.

2. Procédé selon la revendication 1, **caractérisé en ce que** le silicium et le catalyseur voulu sont broyés ensemble dans un broyeur.

3. Procédé selon la revendication 1, **caractérisé en ce que** lé silicium est broyé dans un broyeur qui se compose d'un matériau à partir duquel la concentration voulue en catalyseur dans le silicium est réglée par frottement pendant le procédé de broyage.

4. Procédé selon au moins une des revendications 1 à 3, **caractérisé en ce que** le silicium broyé présente un diamètre moyen de particules de 10 à 1000 µm.

5. Procédé selon au moins une des revendications 1 à 4, **caractérisé en ce que** la concentration du catalyseur, calculée en tant que métal, dans le silicium broyé, est de 0,5 à 10 % en poids, par rapport au poids total du silicium broyé et du catalyseur.

6. Procédé selon au moins une des revendications 1 à 5, **caractérisé en ce que** la concentration du catalyseur, calculée en tant que métal, dans le silicium broyé, est de 1 à 5 % en poids, par rapport au poids total du silicium broyé et du catalyseur.

7. Procédé selon au moins une des revendications 1 à 6, **caractérisé en ce que** la réaction est réalisée à une pression de 1 à 40 bars (absolus).

8. Procédé selon au moins une des revendications 1 à 7, **caractérisé en ce que** la réaction est réalisée à des températures de 400 à 800°C.

9. Procédé selon au moins une des revendications 1 à 8, **caractérisé en ce que** le rapport molaire hydrogène/ tétrachlorure de silicium est de 0,25 / 1 à 4/1.

10. Procédé selon au moins une des revendications 1 à 9, **caractérisé en ce que** le rapport molaire tétrachlorure de silicium / chlorhydrure est de 1 / 0 à 1 / 10.

11. Procédé de préparation du silane et/ou du silicium le plus pur, **caractérisé en ce que** l'on part du trichlorosilane, qui est préparé par réaction du silicium avec de l'hydrogène, du tétrachlorure de silicium et éventuellement du chlorhydrure, le silicium se présentant sous forme broyée et le silicium étant mélangé à un catalyseur lors du broyage.
